# EUROPEAN PATENT SPECIFICATION

(11) **EP 1 330 100 B1**
(45) Date of publication and mention of the grant of the patent: **30.07.2008**
(21) Application number: 03250270.0
(22) Date of filing: 16.01.2003
(51) Int. Cl.: H04L 29/06, G06F 3/12

(54) **Service providing system**
System zum Bereitstellen von Diensten
Système de fourniture de services

(30) Priority: 21.01.2002 JP 2002011703; 21.01.2002 JP 2002011704
(43) Date of publication of application: 23.07.2003
(73) Proprietor: CANON KABUSHIKI KAISHA, Tokyo (JP)
(72) Inventor: Nishio, Masahiro, c/o Canon Kabushiki Kaisha, Ohta-ku, Tokyo (JP)
(74) Representative: Beresford, Keith Denis Lewis

(56) References cited:
- WO-A-00/74333
- WO-A-98/51054
- US-A- 5 559 933
- US-A1- 2001 018 718
- LEHMAN T J ET AL: "Hitting the distributed computing sweet spot with TSpaces" COMPUTER NETWORKS, ELSEVIER SCIENCE PUBLISHERS B.V., AMSTERDAM, NL, vol. 35, no. 4, March 2001 (2001-03), pages 457-472, XP004304859 ISSN: 1389-1286
- MUNSON M ET AL: "Flexible internetworking of devices and controls" INDUSTRIAL ELECTRONICS SOCIETY, 1999. IECON '99 PROCEEDINGS. THE 25TH ANNUAL CONFERENCE OF THE IEEE SAN JOSE, CA, USA 29 NOV.-3 DEC. 1999, PISCATAWAY, NJ, USA,IEEE, US, 29 November 1999 (1999-11-29), pages 1139-1145, XP010366788 ISBN: 0-7803-5735-3
- DROMS R: "RFC 2131 - Dynamic Host Configuration Protocol (DHCP)" IETF RFC, March 1997 (1997-03), XP002193184
- DAMANI O P ET AL: "ONE-IP: techniques for hosting a service on a cluster of machines" COMPUTER NETWORKS AND ISDN SYSTEMS, NORTH HOLLAND PUBLISHING. AMSTERDAM, NL, vol. 29, no. 8-13, 1 September 1997 (1997-09-01), pages 1019-1027, XP004095300 ISSN: 0169-7552

## Description

### FIELD OF THE INVENTION

The present invention relates to a technique of providing services in response to service requests from client apparatuses on a network.

### BACKGROUND OF THE INVENTION

A service providing apparatus and service providing system which provide services in response to service requests from client apparatuses on a network have been known.

For example, with the dramatic proliferation of Internet communication, network-capable devices have rapidly advanced from conventional personal computers to user-interactive devices such as PDAs (Personal Digital Assistances) and cell phones, image processing apparatuses such as scanners, printers, copying machines, and digital cameras, and home electric appliances such as TVs, air conditioners, and refrigerators.

Along with this advance, many organizations for standardization have kept developing data formats for data to be exchanged among these information devices. As a consequence, enormous types of data formats exist.

Take as an example an Internet environment using the WEB. There are a plurality of data formats based on XML (eXtensible Markup Language), for example, XTHML-Basic, XHTML, and SVG (Scalable Vector Graphic). In addition, there are a plurality of standard image data formats, for example, JPEG, PNG, and GIF.

Under such an environment, there still exist demands to print out document information exchanged among information devices as hard copy by image processing apparatuses such as network-capable printers and copying machines. For this reason, each image processing apparatus has executed printing by incorporating formatters for converting various types of data formats into printable data formats or after performing format conversion by using the third server existing on a network.

According to a conventional service providing system, however, if the service requested from a client apparatus cannot be provided by a service providing apparatus alone, no service is provided or the service is provided by using another apparatus designated in advance on the network. In the case wherein another apparatus designated in advance is to be used, if the address information of this apparatus changes, the apparatus cannot be used. For this reason, it is indispensable to update the network information, resulting in very cumbersome processing.

A print service will be exemplified. It is practically impossible to implement formatters for all data formats within the limited resource range of a network-capable printer. That is, it is necessary to limit the types of processable data formats before implementing data formatters. As a consequence, data in a newly developed data format cannot be printed, and hence it is difficult to maintain the product value for a long period of time.

When conversion processing is to be done by using the third server, the IP address of the server must be registered in the client and network-capable printer in advance. Alternatively, in an environment in which a DNS (Domain Name Server) is effective, a host name and the like must be registered in advance. If, therefore, a new conversion server is added to the network, the network information must be reconstructed in both the client and the printer.

In this case, for conversion processing, the following procedure is required. First of all, the client transmits a document to the server and requests it to perform format conversion. Upon reception of a conversion completion notification from the server, the client receives the converted data from the server. After all the data are received, the data which have been format-converted by the server to become printable are transmitted to the printer. Alternatively, the client transfers the document to the printer. After completion of the reception of the data, the printer transmits the data to the server and requests it to perform format conversion. Upon reception of a conversion completion notification from the server, the printer receives the converted data from the server and prints the data. For this reason, complicated procedures and processing routes are required. This makes it difficult to implement protocols for a conversion processing request and conversion processing completion notification among the client, server, and printer. In addition, a long processing time is required. Lehman T J et al: "Hitting the distributed computing sweet spot with Tspaces", Computer Networks, Elsevier Science Publishers B.V., Amsterdam, NL, vol. 35, no. 4, March 2001, pages 457-472 discusses a distributed printing system implemented at the IBM Almaden Research Centre. A computer network was provided which included a client daemon, a printer daemon and file conversion services. The printer daemon registered a set of printers and maintained a database of printer characteristics e.g. speed, colour, duplex, location, etc. The client daemon was run on individuals' client computers. When the client daemon detected a print request, it obtained data for all available printers and enabled a user to select a printer and its settings which would then be sent to the printer daemon. When a print job was received, the printer daemon would determine whether conversion of a print file was required and if necessary invoke a conversion service prior to forwarding data to a selected printer.

In accordance with one aspect of the present invention, there is provided a printer operable to be connected to a client apparatus and service providing apparatus via a network in accordance with claim 1.

In accordance with a further aspect of the present invention, there is provided a printing method in accordance with claim 3.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

Figs. 1 is a block diagram showing the functional arrangements of a client and service providing device which constitute a service providing system according to the first embodiment of the present invention;
Fig. 2 is a flow chart showing a processing method for the service providing system according to the first embodiment of the present invention;
Fig. 3 is a flow chart showing a processing method for the service providing system according to the first embodiment of the present invention;
Fig. 4 is a view showing an example of the request format issued when a client searches for a print service;
Fig. 5 is a view showing an example of the response format issued when a print service returns attribute information to the client;
Fig. 6 is a view showing an example of the request format issued when a client transmits a job to a print service;
Fig. 7 is a view showing an example of the request format issued when a print service searches for a data format conversion service;
Fig. 8 is a view showing an example of the response format issued when the data format conversion service returns attribute information to the print service;
Fig. 9 is a flow chart showing a process in which a network-capable printer in a service providing system according to the second embodiment of the present invention searches for one of service providing servers dispersed on the network;
Fig. 10 is a view showing an example of the request to search for a file conversion server in the service providing system according to the second embodiment of the present invention;
Fig. 11 is a view showing an example of the response to the request in Fig. 10;
Fig. 12 is a flow chart showing a process between the time a client in the service providing system according to the second embodiment of the present invention searches for a printer and the time a print job is executed;
Fig. 13 is a view showing an example of the request format issued when the client in the service providing system according to the second embodiment of the present invention searches for a print service;
Fig. 14 is a view showing an example of the response format issued when a print service in the service providing system according to the second embodiment of the present invention returns attribute information to the client;
Fig. 15 is a view showing an example of the request issued when a client in the service providing system according to the second embodiment of the present invention transmits a print job to a print service;
Fig. 16 is a flow chart showing print processing in the printer in the service providing system according to the second embodiment of the present invention;
Fig. 17 is a view showing an example of the data conversion request from the printer to the server in the service providing system according to the second embodiment of the present invention; and
Fig. 18 is a view showing an example of the structure of a service table in the service providing system according to the second embodiment of the present invention.

### DETAILED DESCRIPTION OF THE PREFERRED EMBODIMENTS

The preferred embodiments of the present invention will be described in detail below with reference to the accompanying drawings. Note that the range of the present invention is not limited only to the protocols, versions, addresses, other numerical values, and the like described in the embodiments unless otherwise specified.

### (First Embodiment)

A print system as the first embodiment of a service providing system according to the present invention will be described.

### <System Arrangement>

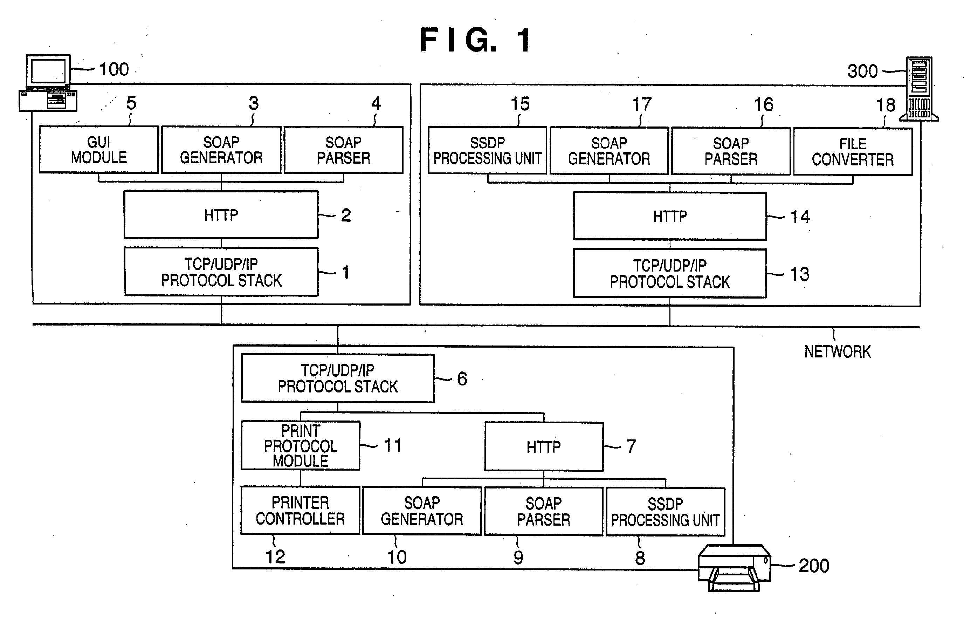

Fig. 1 is a block diagram showing the arrangement of the print system as the first embodiment of the present invention.

This system includes a client 100, printer 200, and server 300. More specifically, the system has applications to be executed on the client 100 side, services implemented in the server 300, and the network-capable printer 200.

An application provided to the client 100 is software that operates in the operating system environment in which the client 100 operates. This software includes a TCP/UDP/IP protocol stack 1 as a communication function, a Hyper Text Transfer Protocol version 1.1 (to be referred to as HTTP hereinafter) 2 on the protocol stack, a SOAP generator 3 for issuing a Simple Object Access Protocol (to be referred to as a SOAP hereinafter) request, and a SOAP parser for executing analysis of a response using SOAP. The software also has a GUI module 5 to receive requests interactively from a user and display processing results.

A network service, the network-capable printer 200 in this embodiment, includes a TCP/UDP/IP protocol stack 6 as a communication function, and HTTP 7 on the protocol stack. This printer has a discovery request SSDP (Simple Service Discovery Protocol) processing unit 8 on the upper layer of HTTP 7 to issue and analyze SSDP requests and responses.

In this case, for a request from a client, SOAP is used in the entity body portion of the HTTP request, and hence a SOAP parser 9 for analyzing request contents and a SOAP generator 10 for issuing a response are implemented on the upper layer of HTTP 7.

A print protocol module 11 is implemented on the protocol stack 6 to have a function of analyzing the print request issued from the client and sending out the print request to a printer controller 12.

The server 300 also includes a TCP/UDP/IP protocol stack 13 as a communication function and HTTP 14 on the protocol stack to analyze an HTTP request and perform response processing. The server 300 has a discovery request SSDP processing unit 15 on the upper layer of HTTP 14 to analyze an SSDP request and execute a response.

In addition, for a request from the client, SOAP is used in the entity body portion of the HTTP request, and hence a SOAP parser 16 for analyzing request contents and a SOAP generator 17 for issuing a response are implemented on the upper layer of HTTP 14.

The server 300 further includes a file converter 18. The file converter 18 has a function of converting the documents (e.g., documents having extensions doc, xls, and ppt) created by "MS Office" (registered trademark), which is an application provided by Microsoft, or Adobe PDF data into a designated page description language.

Although not shown in Fig. 1, a plurality of other service providing servers exist on the network, e.g., a server which has the same arrangement as that of the server 300 and a function of converting Adobe PDF data into a designated page description language, a server which functions as a file converter to decompress JPEG compressed data and convert the data into a designated page description language, a server having a function of decompressing GIF compressed data and converting the data into a designated page description language, and a server having a function of decompressing PNG compressed data and converting the data into a designated page description language.

The arrangement of software in each device has been described above. The hardware arrangement of each device includes a so-called computer arrangement. This hardware arrangement includes at least a CPU for executing processing, memories storing programs to be executed by the CPU and data, and a communication means for connecting to the network. The control operation to be described below is achieved by reading out programs stored in the respective memories, as needed, and executing them by the CPU.

### <Flow of Control>

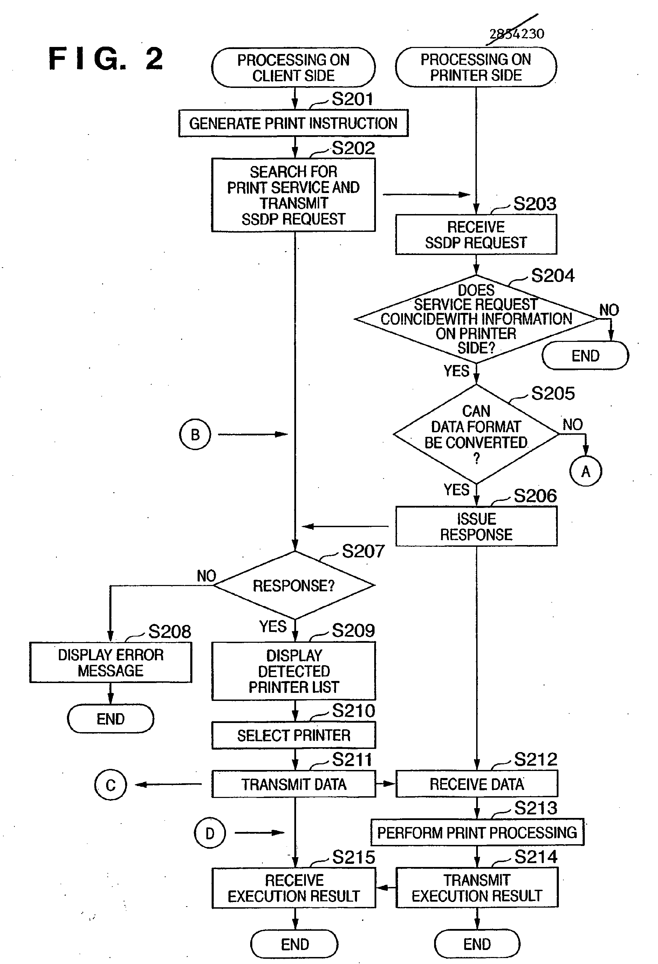

The flow of control in this system will be described next with reference to the flow chart of Fig. 2.

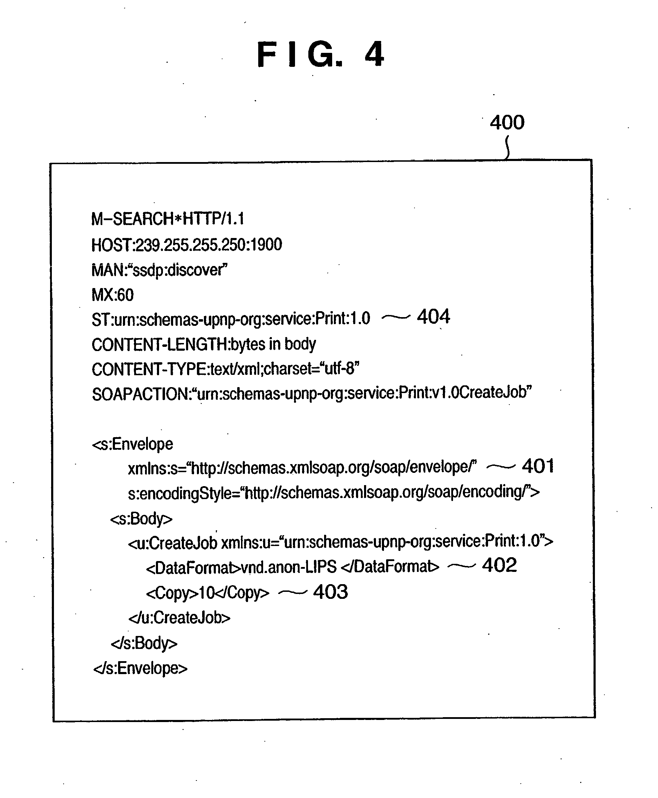

Assume that the document created by an application, e.g., a wordprocessing application, which operates on a network-connected client, e.g., a personal computer, is to be printed. When the user selects "print" from a menu, a print instruction (job) is generated to the client 100 (S201). It is then checked whether there is any printer which can be used to execute this job on the network (S202). In this case, SSDP defined by Universal Plug and Play Architecture 1.0 is used as a protocol used for the search, and an SSDP request (also called an HTTP request) 400 in the format shown in Fig. 4 is issued as an HTTP packet to multicast address 239.255.255.250 and port number 1900.

In this case, SOAP is used as the entity body of the HTTP request 400, the format used in this case is described within an Envelope tag 401 in Fig. 4, and DataFormat 402 and Copy 403 are notified as arguments of a CreateJob request. DataFormat 402 is a page description language or image format name. For example, a name such as PCL, Postscript, Lips, JPEG, or PNG is described as DataFormat 402. Copy 403 indicates the number of copies. Fig. 4 shows an example of the job in which Lips is designated as DataFormat, and 10 copies are designated as Copy.

Upon reception of the HTTP request 400 in Fig. 4 in step S203, the network-capable printer 200 analyzes the ST (Service Type) header (404 in Fig. 4) of the request in step S204. If the header content indicates an ST designation other than Print, or the packet contents are invalid, the flow advances to the end to interrupt the processing and ignore the request without issuing any response. If the header content indicates Print, the entity body of the HTTP request 400 is continuously analyzed. Referring to Fig. 4, since "service:Print" is written in an ST header 404, it is discriminated as the HTTP request 400 for searching for a printer, and the flow advances to step S205.

In step S205, the printer 200 analyzes the SOAP message (contents below 401 in Fig. 4) of the entity body of the HTTP request 400, and checks the contents of DataFormat 402 and Copy 403 as arguments of the CreateJob request to determine whether the printer is capable of printing data in the data format described in DataFormat 402 by the number of copies described in Copy 403.

### <<When Printing Can Be Done By Printer alone>>

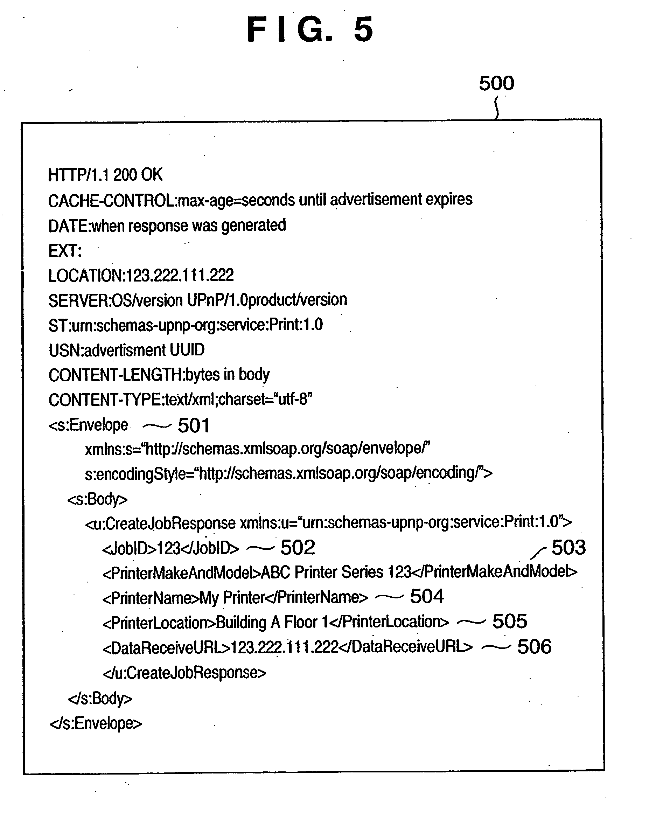

If it is determined in step S205 that the print can perform processing, the flow advances to step S206 to issue and HTTP response 500 in the format shown in Fig. 5 to the client 100 by unicasting.

In this case as well, SOAP is used as the entity body of the HTTP response 500, and the following pieces of information stored in the memory of the printer are notified to the client 100. These pieces of information are described within an Envelope tag 501 in Fig. 5, and the following are notified as return values for the CreateJob request:
JobID 502: job ID
PrinterMakeAndModel 503: printer vender/product name
PrinterName 504: printer name
PrinterLocation 505: printer location
DataReceiveURL 506: data destination URL
In this case, JobID is an integer from 1 to 255 and an ID for identifying a request job from the client 100. This ID is generated on the printer 200 side.
Fig. 5 shows a case wherein "123" is set as JobID.

Upon issuing the SSDP request 400, the client 100 waits for a response for a predetermined period of time in step S207. If no response is received in this period, it is determined that the job cannot be executed, and the flow advances from step S207 to step S208 to display an error message to the user. The processing is then terminated.

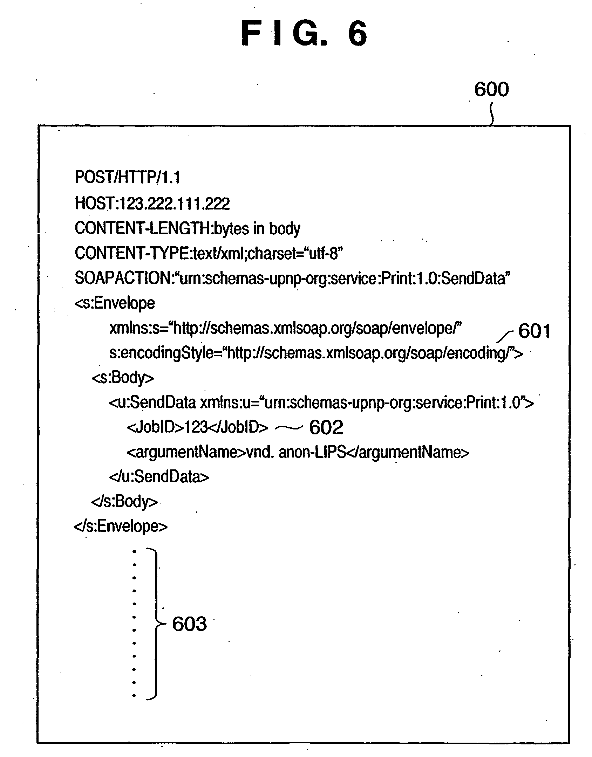

If one or more responses are received within the predetermined period of time, the printer names of network printers from which the responses have been received are displayed in the form of a list in step S209. In step S210, when the user designates one printer from the printer list, the client 100 transmits print target data to be printed in the format of an HTTP request 600 in Fig. 6 to a data destination URL in the attribute information notified from the designated printer in step S211. Assuming that the user has selected the network-capable printer 200 in this case, the client 100 transmits the print target data to 123.222.111.222 described in DataReceiveURL 506 in Fig. 5.

In this case as well, SOAP is used as the entity body of the HTTP request 600, the format is described within an Envelope tag 601 in Fig. 6, and JobID 602 is notified as an argument of a SendData request.
Following SOAP-Envelope, print target data 603 is added in DataFormat (Lips in this case) designated when a CreateJob request is issued. The resultant data is then transmitted.

In this case, in JobID 602, the value notified from the printer is set as a return value for the CreateJob request. In this case, "123" is set as JobID 602, indicating that the print target data corresponds to the response in Fig. 5.

When the printer 200 receives the print target data in step S212, the flow advances to step S213 to start print processing and execute print processing based on JobID 602 for the number of copies designated by CreateJob in advance. When the print processing is completed, the flow advances to step S214 to issue the status code "200 OK" as an HTTP response to the client 100, and notifies the client 100 of the corresponding information. The processing is then terminated.

If the print processing cannot be properly executed, the printer 200 issues the status code "500 Internal Server Error" as an HTTP error response and notifies the client of the corresponding information in step S214. The processing is then terminated. Although not shown in Fig. 2, when no data is received in step S212 within the predetermined period of time after the response is issued in step S206, the processing on the printer side is also terminated. If data is transmitted from the client 100 after the predetermined period of time elapses and the processing on the printer side is terminated, the printer 200 issues "400 Bad Request" and notifies the client of the corresponding information. Upon reception of any execution result from the printer 200 in step S215, the client 100 terminates the processing.

### <<When Printing Cannot Be Done by Printer alone>>

Consider a case wherein when the SOAP message of an HTTP request is analyzed, and the content of DataFormat 402 as an argument of a CreateJob request is checked, it is determined in step S205 that the data format cannot be converted into a printable format in the printer 200. Assume that the content of DataFormat 402 in the HTTP request 400 is XHTML, and the printer 200 has Lips as a printable format but does not have any converter for conversion from XHTML to Lips.

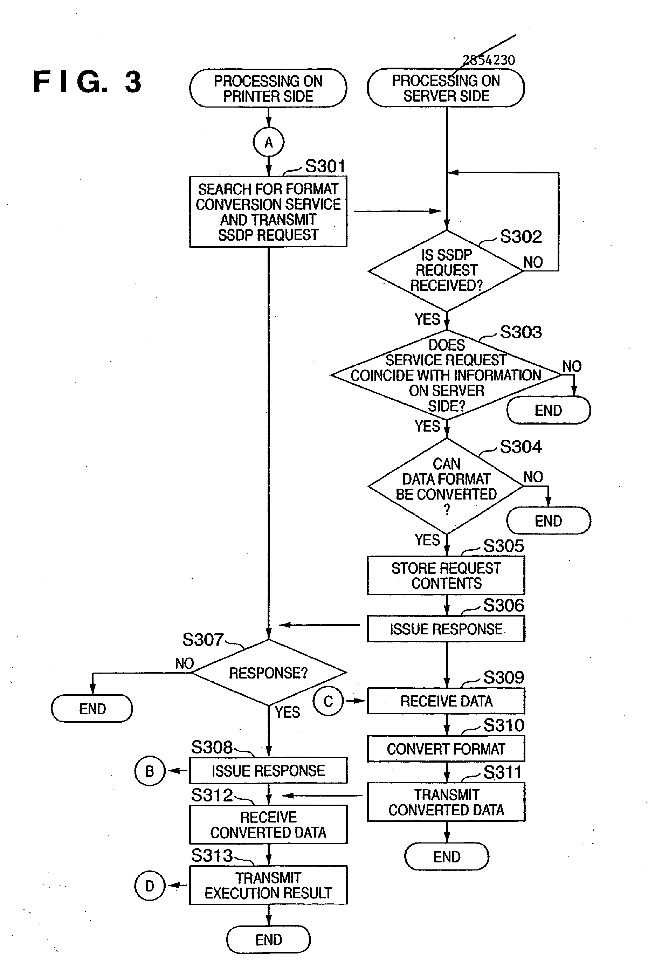

In this case, the flow advances to step S301 in Fig. 3, and the printer 200 searches for a server, on the network, which includes a service of converting the data format (XHTML) designated by the client 100 into a printable format (Lips) in the printer 200. In other words, the printer 200 searches for a server that provides a service required to accomplish the job from the client 100.

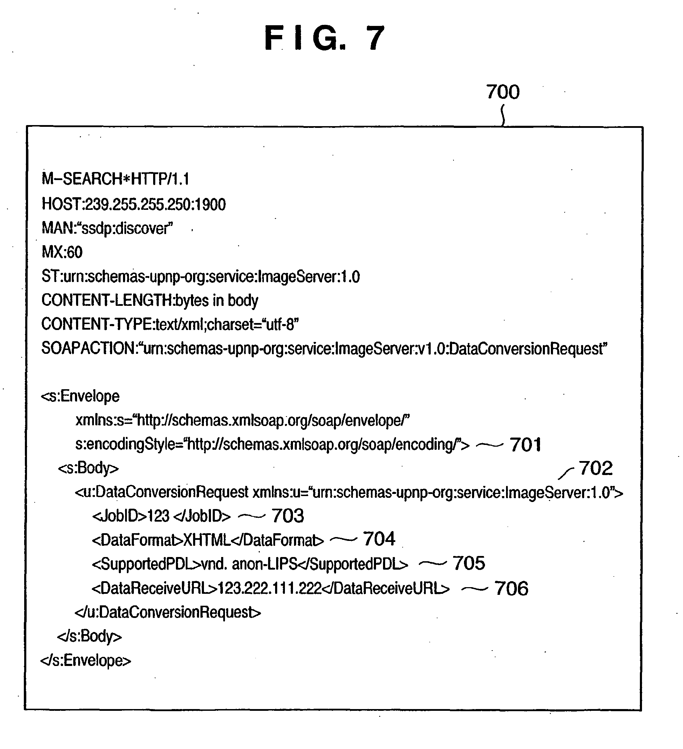

As a protocol used for the search, SSDP is used, and an SSDP request (to be also referred to as an HTTP request hereinafter) 700 in the format shown in Fig. 7 is issued as an HTTP packet to multicast address 239.255.255.250 and port number 1900.

In this case as well, SOAP is used as the entity body of the HTTP request. When a search packet is issued, the data format for which the client 100 has generated the print request, the information of the page description language supported by the printer 200, and the information of a data destination URL after conversion processing are notified.

The format in this case is described within an Envelope tag 701, and the following are notified as arguments of a DataConversionRequest request 702:
JobID 703: job ID
DataFormat 704: data format notified as argument of CreateJob request by client
SupportedPDL 705: page description language supported by printer
DataReceiveURL 706: data destination URL after conversion processing
In this case, JobID is an integer from 1 to 255 and an ID for identifying a request job from the client 100. This ID is generated on the printer 200 side.

Fig. 7 shows the SSDP request 700 in which the job ID is "123", the format of the data transmitted from the client is "XHTML", the page description language is "Lips", and the data destination URL (the address of the printer 200) is "123.222.111.222".

If the server 300 including a data format conversion service receives the HTTP request 700 in step S302, the flow advances to step S303 to analyze the ST (Service Type) header of the request. If the header content indicates an ST designation other than ImageServer, or the packet contents are invalid, the flow advances to the end to interrupt the processing and ignore the request without issuing any response. If the ST content indicates ImageServer, the entity body of the HTTP request 700 is continuously analyzed.

Assume that when the SOAP message of the HTTP request 700 is analyzed, and the contents of DataFormat 704 and SupportedPDL 705 as arguments of the DataConversionRequest request 702 are checked, it is determined that the server 300 cannot convert, by itself, the data format (XHTML in the case shown in Fig. 7) into the page description language (Lips in the case shown in Fig. 7) designated by the printer 200. In this case, the flow advances to the end to ignore the SSDP request 700 without issuing any response.

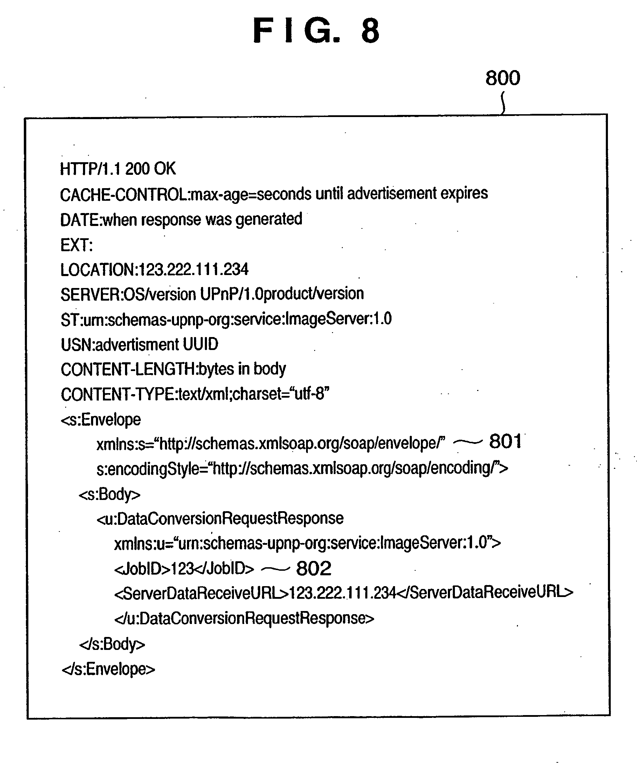

If conversion can be done, the flow advances to step S305, in which the server 300 stores all the arguments (JobID 703, DataFormat 704, SupportedPDL 705, and DataReceiveURL 706 in this case) notified by the DataConversionRequest request 702. In step S306, the server 300 issues an HTTP response 800 in the format shown in Fig. 8 to the printer 200 by unicasting.

In this case as well, SOAP is used as the entity body of the HTTP response 800, and the following pieces of information are notified to the printer. These pieces of information are described within an Envelope tag 801, and the following are notified as return values for the DataConversionRequest request:
JobID 802: job ID
ServiceDataReceiveURL: data destination URL
In this case, when the printer issues DataConversionRequest, the same ID ("123" in this case) as the value notified as an argument to the server is returned as JobID.

Upon issuing DataConversionRequest, the printer 200 waits for a response in a predetermined period of time in step S307. If no response is received from any servers, the flow advances to the end to terminate the processing upon determining that the job cannot be executed. In this case, the printer 200 ignores the CreateJob request from the client 100 without issuing any response.

If responses are received from any servers within the predetermined period of time, the service provided by the server from which the first response was received is used, but the servers which have notified other responses are ignored and not used in this embodiment. Assume that in this case, the response from the server 300 has arrived first at the printer 200.

When the printer 200 receives the response from the server 300, the flow advances to step S308 to issue an HTTP response in the same format as that shown in Fig. 5 to the client 100 by unicasting.

More specifically, SOAP is used as the entity body of the HTTP response, and the information (job ID, printer vender/product name, printer name, printer location, and data destination URL) stored in the memory of the printer is notified to the client 100.

Note that as the job ID, the same ID as that generated when DataConversionRequest was issued by the printer 200 to the data format conversion server 300 is designated.

In this case, as the data destination URL, the address value (123.222.111.234 in the case shown in Fig. 8) described in ServerDataReceiveURL notified by the data format conversion server to the printer 200 as a response to DataConversionRequest from the printer 200 is set.

When the response issued in step S308 is sent to the client 100, the flow returns to step S207 in Fig. 2. The client 100 then displays a printer list on the basis of the received response, and waits for the selection of a printer by the user in step S210. When the user selects the printer which has transmitted the response in step S308, print target data is transmitted to the address of the server 300 in step S211. The address of the server 300 is the address (123.222.111.234 in the case shown in Fig. 8) set as ServerDataReceiveURL in steps S306 and S308.

Upon reception of the data in step S309, the data format conversion server 300 executes data format conversion processing in step S310. That is, the server 300 converts the data format into the page description language (Lips in the case shown in Fig. 7) designated in DataConversionRequest by the printer 200 in advance on the basis of JobID.

When the conversion processing is completed, the data format conversion server 300 transmits the PDL data after conversion to the data destination URL (123.222.111.222 in the case shown in Fig. 7) after conversion which is designated in DataConversionRequest by the printer 200, on the basis of JobID in step S311.

In this case, the data format conversion server 300 copies the HTTP header portion and SOAP Envelope portion of the SendData request received from the client 100 without any change, adds the PDL data after conversion, following the SOAP Envelope portion, and transmits the resultant data.

Upon reception of the Lips data after conversion, the printer 200 starts print processing, and executes print processing for Copy (the number of copies) designated by CreateJob, on the basis of JobID. When the print processing is completed, the printer 200 issues the status code "200 OK" as an HTTP response to the client and notifies the client of the corresponding information in step S313 as in the same manner in step S214. If the print processing cannot be properly executed, the printer 200 issues the status code "500 Internal Server Error" as an HTTP error response and notifies the client of the corresponding information.

With the above sequence of operations, the print processing is completed.

According to this embodiment, by using services dispersed on the network, data in various data formats and image formats can be converted into data that can be printed by the printer. This makes it unnecessary to incorporate any format conversion functions in network-capable service providing apparatuses.

Unlike the conventional client/server type network service system, this system allows a user to dynamically search for and find necessary services, and hence eliminates the necessity to reconstruct network information even when a new service is added on the network.

In addition, the number of times of data transfer between devices until a given job is completed is decreased and protocols for data transfer are simplified, thereby improving processing efficiency.

This makes it possible to easily provide services in response to service requests from client apparatuses on the network.

### (Second Embodiment)

The second embodiment of the present invention will be described next. This embodiment differs from the first embodiment only in control to be done, but has the same system arrangement as that of the first embodiment. Therefore, the same reference numerals as in the first embodiment denote the same parts in the second embodiment, and a description thereof will be omitted.

### <Flow of Control>

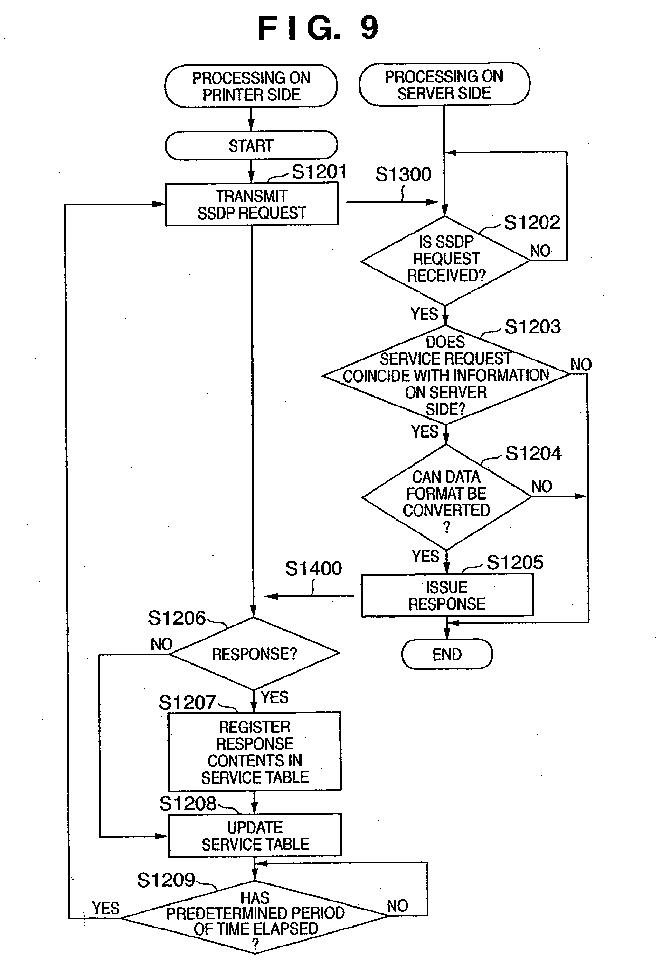

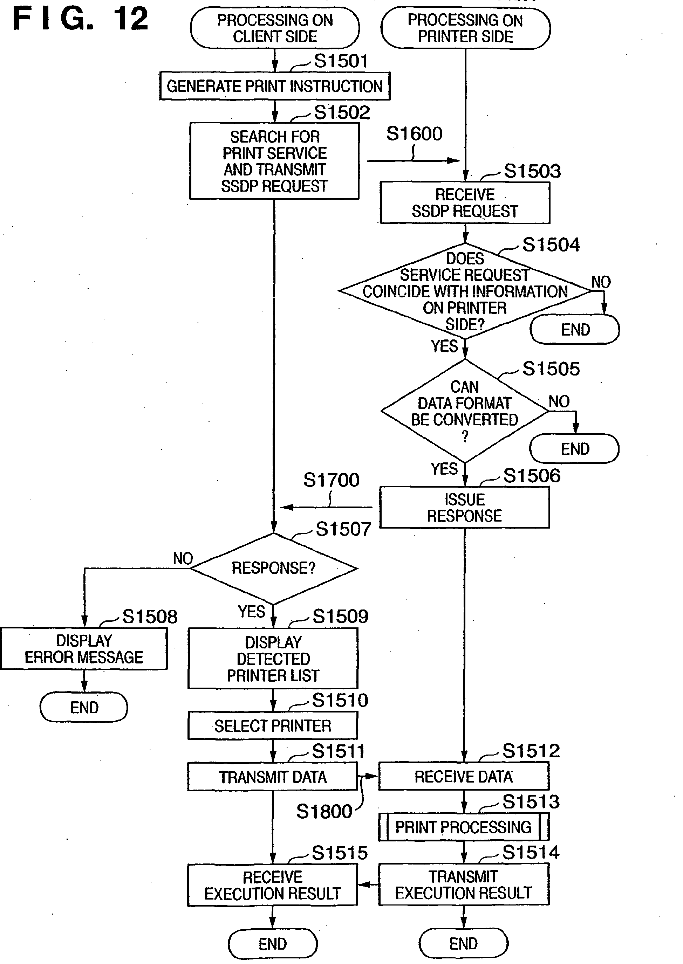

The flow of control according to the second embodiment will be described next with reference to the flow charts of Figs. 9, 12. and 16.

### [Service Table Creation Processing]

Fig. 9 is a flow chart for explaining the flow of processing in which a network-capable printer 200 searches for a given one of service providing apparatuses dispersed on the network.

Immediately after startup, in step S1201, the network-capable printer 200 searches the service providing apparatuses existing on the network for an apparatus capable of converting a file format into a page description language supported by the network-capable printer 200.

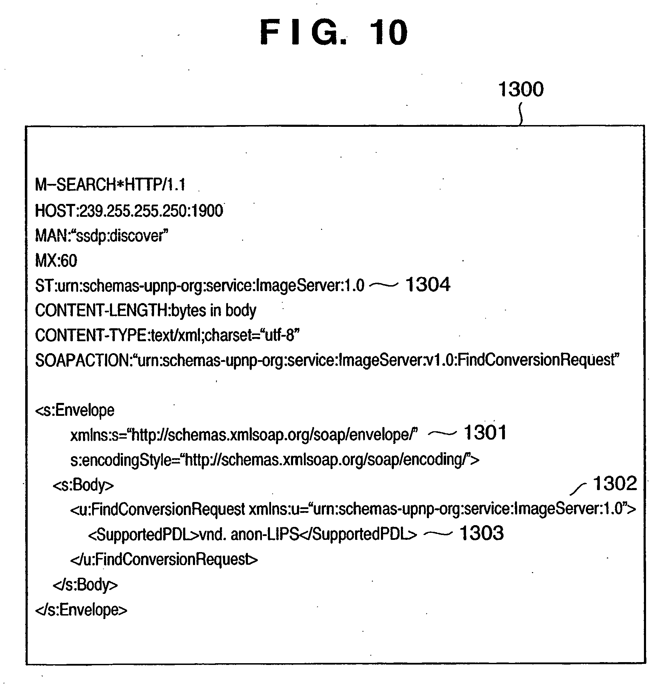

In this case, SSDP defined by Universal Plug and Play Architecture 1.0 is used as the protocol for the search, and an HTTP request 1300 in the format shown in Fig. 10 is issued as an HTTP packet to multicast address 239.255.255.250 and port number 1900.

In this case, SOAP is used as the entity body of the HTTP request 1300, and the page description language supported by the printer 200 and the information of the transfer destination URL of data after conversion are notified when a search packet is issued. In the HTTP request 1300 shown in Fig. 10, the format in this case is described within an Envelope tag 1301, and the following is notified as an argument of a FindConversionRequest request 1302:
SupportedPDL 1303: page description language supported by printer

Upon reception of the HTTP request 1300 in step S1202, the server including the data format conversion service analyzes an ST (Service Type) header 1304 of the request in step S1203. If the header content indicates an ST designation other than ImageServer, or the packet contents are invalid, the flow advances to the end to interrupt the processing and ignore the HTTP request 1300 without issuing any response. If the content of the ST header 1304 indicates ImageServer, the flow advances to step S1204 to continuously analyze the entity body 1301 of the HTTP request 1300.

More specifically, the content of SupportedPDL 1303 as an argument of the FindConversionRequest request is checked to determine whether the format can be converted into the page description language (Lips in Fig. 10) designated by this printer. That is, the server determines whether it can provide a service as a preprocess for the service contents designated by the printer 200.

If the format cannot be converted into the page description language designated by the printer, the flow advances to the end to ignore the request without issuing any response.

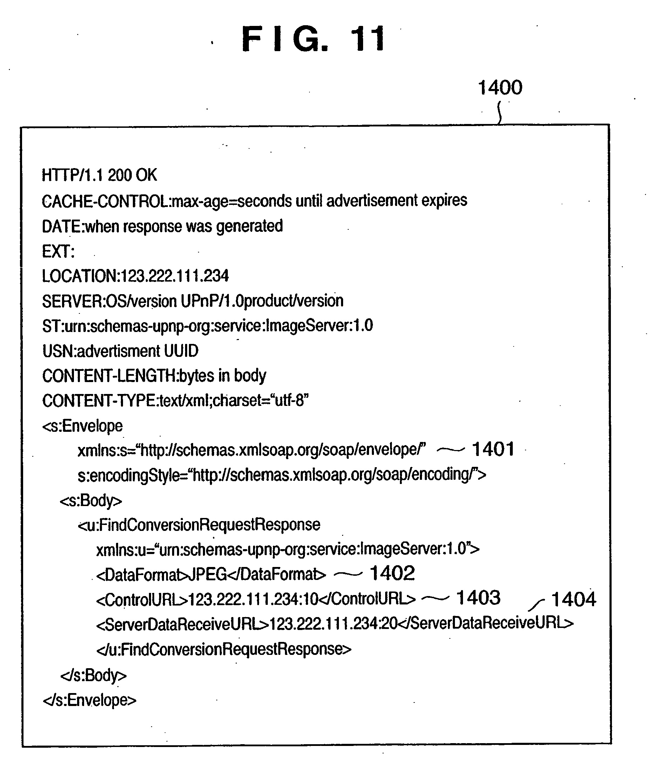

If conversion can be done, the flow advances to step S1205 to issue an HTTP response 1400 in the format shown in Fig. 11 to the printer 200 by unicasting. In this case, SOAP is used as the entity body of the HTTP response 1400, and the following pieces of information are notified to the printer.

These pieces of information are described within an Envelope tag 1401 in the HTTP response 1400 in Fig. 11, and the following are notified as return value for the FindConversionRequest request:
DataFormat 1402: conversion data format supported by server capable of converting format into PDL designated by client
ControlURL 1403: control command destination URL
ServerDataReceiveURL 1404: data transfer destination URL

Upon issuing FindConversionRequest, the printer 200 waits for a response from a server 300 in step S1206. If a response is received from the server 300, the flow advances to step S1207 to create a service table as a data base in which the response contents from the server 300 are stored. In this case, any service which has been registered but from which no response has been received is deleted as an unavailable service from the service table in step S1208.

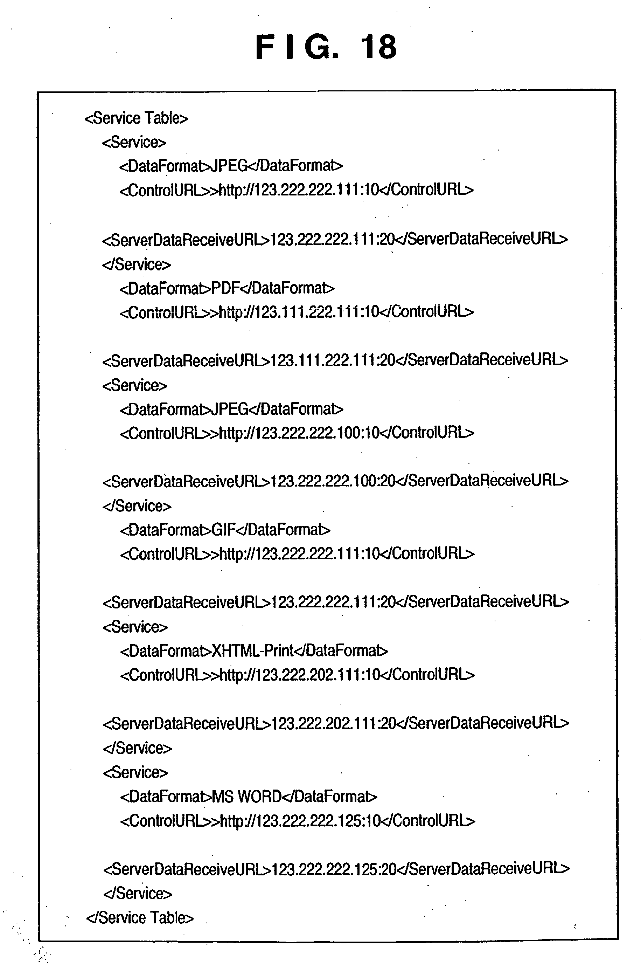

Fig. 18 is a view showing the structure of the service table. As shown in Fig. 18, with respect to all the servers from which responses are received, the pieces of information of return values for the HTTP response 1400 described above, i.e., DataFormat, ControlURL, and ServiceDataReceiveURL, are stored, in the memory managed by the printer 200, in a text file format by using XML description. The information of a newly added sever is added to the end of the text file, and any service which has been registered but from which no response has been received is deleted from the text file, thereby always recording/managing the latest information. In this embodiment, when such a service table is managed, the information of ControlURL is used to identify a server which provides a service.

In step S1209, the printer 200 checks whether a preset time has elapsed. If YES in step S1209, the flow returns to step S1201. That is, the printer 200 repeatedly searches for the service providing server 300 like the one described above at predetermined intervals and always updates the contents of the service table.

With this procedure, the network-capable printer 200 acquires the information of a data format conversion service that can be used.

### [Print Job Execution Processing]

Fig. 12 is a flow chart showing a process between the time a network-connected client 100 searches for a print service and the time a print job is executed.

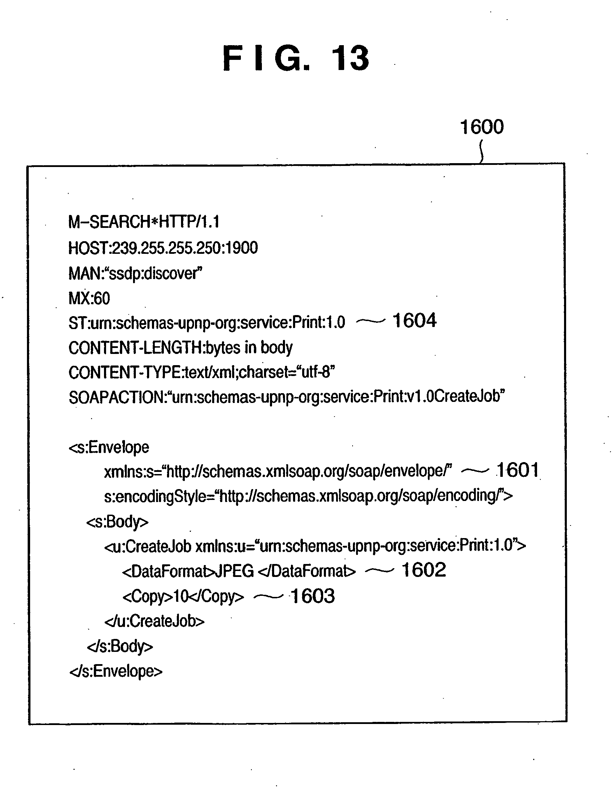

Assume that the document created by an application (e.g., a wordprocessing application) which operates on the network-connected client 100, e.g., a personal computer, is to be printed. When the user selects "print" from a menu, a print instruction (job) is generated to the client 100. A search is then performed to check whether there is any printer which can be used to execute this job on the network (S1502). In this case, SSDP defined by Universal Plug and Play Architecture 1.0 is used as a protocol used for the search, and an SSDP request (also called an HTTP request) 1600 in the format shown in Fig. 13 is issued as an HTTP packet to multicast address 239.255.255.250 and port number 1900.

In this case, SOAP is used as the entity body of the HTTP request 1600, the format used in this case is described within an Envelope tag 1601 in Fig. 13, and DataFormat 1602 and Copy 1603 are notified as arguments of a CreateJob request. DataFormat is a page description language, document format, or image format name. For example, a name such as PCL, Postscript, Lips, JPEG, or PNG is described as DataFormat. Copy indicates the number of copies. Fig. 13 shows an example of the job in which JPEG is designated as DataFormat, and 10 copies are designated as Copy.

Upon reception of the HTTP request 1600 in Fig. 13 in step S1503, the network-capable printer 200 analyzes an ST (Service Type) header 1604 of the request 1600 in step S1504. If the header content indicates an ST designation other than Print, or the packet contents are invalid, the processing is interrupted and the request is ignored without issuing any response. If the content of the ST header 1604 indicates Print, the entity body of the HTTP request 1600 is continuously analyzed. Referring to Fig. 13, since "service:Print" is written in the ST header 1404, it is discriminated as an HTTP request for searching for a printer, and the flow advances to step S1505.

In step S1505, the printer 200 analyzes the SOAP message which is the entity of the HTTP request 1600, and checks the contents of DataFormat 1602 and Copy 1603 as arguments of the CreateJob request to determine whether the network-capable printer 200 is capable of printing the data in the data format described in DataFormat 1602 by the designated number of copies by itself. That is, it is checked whether printer 200 can accomplish the job requested from the client 100 alone.

In step S1505, it is checked whether the data format described in DataFormat 1602 can be converted by the data format conversion service which has been searched/found and stored in the service table in the memory of the network printer 200 in the processing shown in Fig. 9.

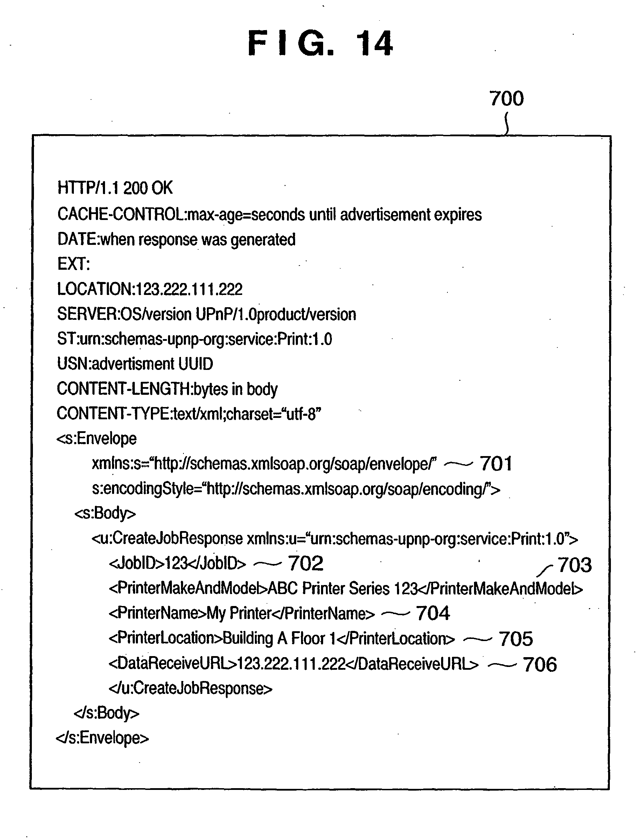

If the job can be accomplished by the printer 200 alone, or data format conversion can be done by another server, an HTTP response 1700 in the format shown in Fig. 14 is issued to the client 100 by unicasting (S1506).

In any case, if it is determined that the job cannot be accomplished, the request is ignored without issuing any response.

SOAP is used as the entity body of the HTTP response 1700 to the client, and the following pieces of information stored in the memory in the printer are notified to the client. These pieces of information are described within an Envelope tag 1701 of the HTTP response 1700 in Fig. 14, and the following are notified as return values for the CreateJob request:
JobID 1702: job ID
PrinterMakeAndModel 1703: printer vender/product name
PrinterName 1704: printer name
PrinterLocation 1705: printer location
DataReceiveURL 1706: transfer destination URL of print target data

In this case, JobID is an integer from 1 to 255 and an ID for identifying a request job from the client 100. This ID is generated on the printer 200 side. Fig. 14 shows a case wherein "123" is set as JobID.

Upon issuing the SSDP request 1600, the client 100 waits for a response in a predetermined period of time in step S1507. If no response is received in this period, it is determined that the job cannot be executed, and the flow advances to step S1508 to display an error message to the user and terminate the processing.

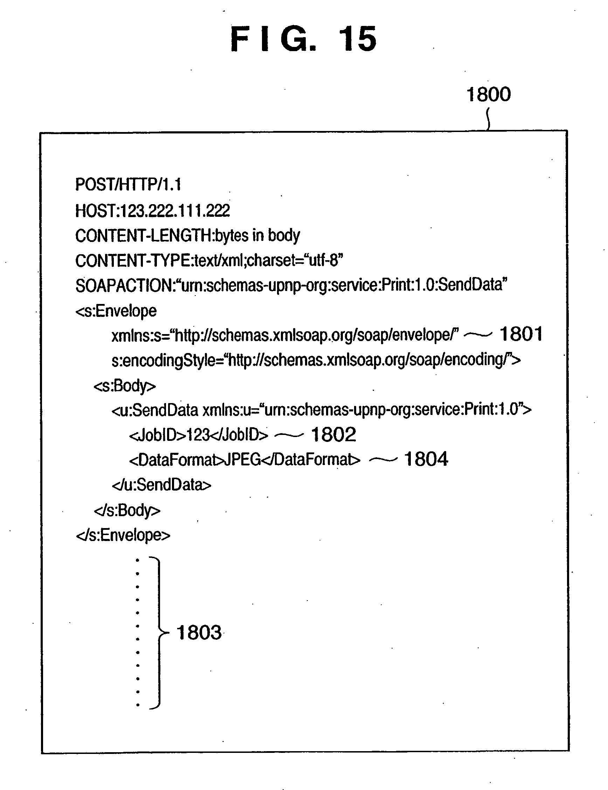

If one or more responses are received within the predetermined period of time, the printer names of network printers from which the responses have been received are displayed in the form of a list in step S1509. In step S1510, when the user designates one printer from the printer list, the client 100 transmits print target data to be printed in the format of a POST request 1800 which is a kind of the HTTP request shown in Fig. 15 to a data destination URL in the attribute information notified from the designated printer in step S1511. Assuming that the user has selected the printer 200 in this case, the client 100 transmits the print target data to 123.222.111.222 described in the DataReceiveURL 1706 in Fig. 14.

In this case as well, SOAP is used as the entity body of the HTTP request 1800, the format is described within an Envelope tag 1801 in Fig. 15, and JobID 1802 is notified as an argument of a SendData request. Following SOAP-Envelope, print target data 1803 is added in DataFormat (JPEG in this case) designated when the CreateJob request 1600 is issued. The resultant data is then transmitted.

In this case, in JobID 1802, the value notified from the printer is set as a return value for the CreateJob request. In this case, "123" is set as JobID 1802, indicating that the print target data corresponds to the response 1700 in Fig. 14.

When the printer 200 receives the print target data in step S1512, the flow advances to step S1513 to start print processing and execute print processing based on JobID 1802 for the number of copies designated by CreateJob in advance. When the print processing is completed, the flow advances to step S1514 to issue the status code "200 OK" as an HTTP response, and notifies the client 100 of the corresponding information. The processing is then terminated.

If the print processing cannot be properly executed, the printer 200 issues the status code "500 Internal Server Error" as an HTTP error response and notifies the client of the corresponding information in step S1514. The processing is then terminated.

Although not shown in Fig. 12, when no data is received in step S1512 within the predetermined period of time after the response is issued in step S1506, the processing on the printer side is also terminated. If data is transmitted from the client 100 after the predetermined period of time elapses and the processing on the printer side is terminated, the printer 200 issues "400 Bad Request" and notifies the client of the corresponding information.

Upon reception of any execution result from the printer 200 in step S1515, the client 100 terminates the processing.

### [Print Processing by Printer]

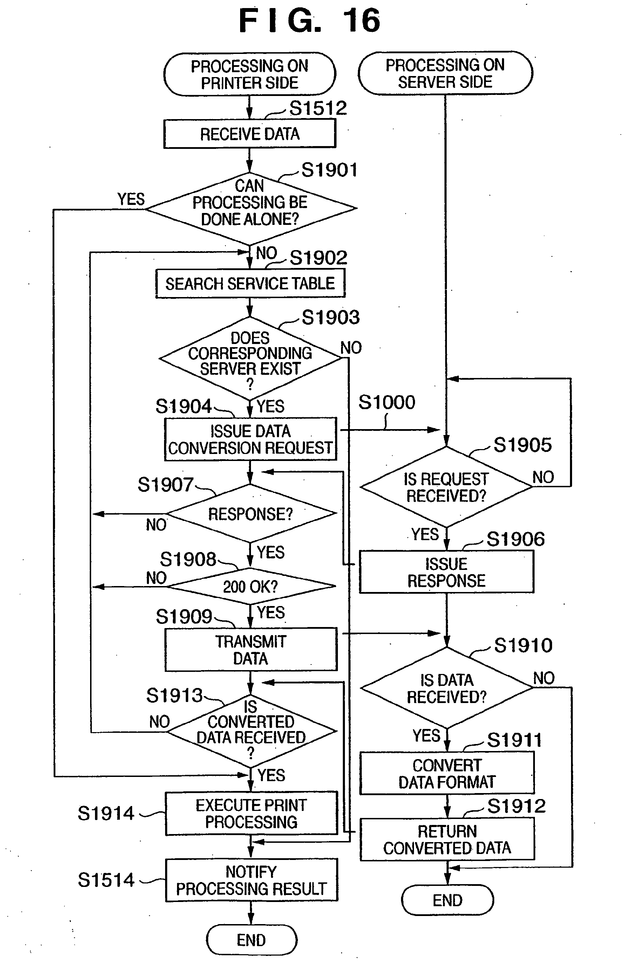

Fig. 16 is a flow chart for explaining the detailed contents of print processing (S1513) performed by the printer 200 which has received print target data.

Upon reception of print target data in step S1512, the printer 200 checks in step S1901 whether the data format (DataFormat 1804 in Fig. 15; JPEG in this case) designated by the client 100 is a data format that can be processed by itself.

If the printer 200 determines that it can print the data alone, the flow advances to step S1914, in which the received data is directly transmitted to the printer controller 12, print processing is started, and print processing for the number of copies (10 in this case) designated by Copy 1603 in the HTTP request 1600 on the basis of JobID is executed. The flow advances to step S1514 to notify the client 100 of the processing result. The processing is then terminated.

If the printer 200 determines that it cannot print the data alone, the flow advances from step S1901 to step S1902 to search the service table prepared in the memory of the printer 200 for a server registered as a server which can convert the data format into the data format (DataFormat 1804 in Fig. 15; JPEG in this case) designated by the client 100.

In other words, the printer 200 searches for a server which provides a service required to accomplish the job from the client 100.

Since the flow has advances to step S1902 upon determining in step S1505 in Fig. 12 that data format processing can be done, a required server is usually registered in the service table. However, the service table shown in Fig. 9 may be updated and the server may be deleted from the service table in the interval between step S1505 and step S1902. In this case, it is determined in step S1903 that there is no corresponding server, and the flow advances to step S1514 without performing any print processing to transmit an error notification to the client 100.

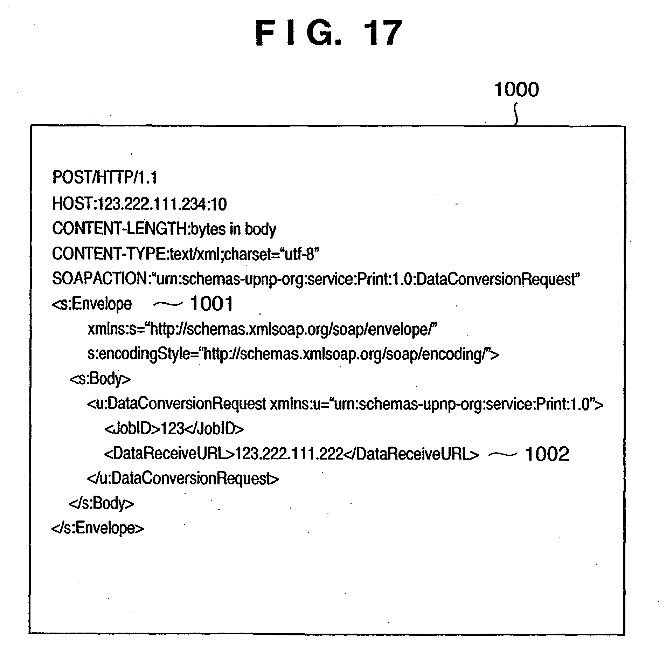

In other cases, the flow advances from step S1903 to step S1904. In step S1904, with regard to the format conversion service providing server capable of conversion to the data format requested from the client 100, the printer 200 acquires, from the service table,
ControlURL: control command destination URL
ServerDataReceiveURL: transfer destination URL of print target data
and issues a POST command 1000 as a kind of HTTP request as shown in Fig. 17 to ControlURL which is the destination of the control command for the server. In this case, SOAP is used as the entity body of the HTTP request, the format in this case is described within an Envelope tag 1001 in the POST command 1000, and
DataReceiveURL 1002 which is a data transfer destination URL after conversion is notified as an argument of the DataConversionRequest request.

Upon reception of this POST command 1000 in step S1905, the data format conversion server 300 returns an HTTP response to the printer 200 in step S1906.

In this case, if the request can be executed, the server 300 issues and notifies the status code "200 OK" as an HTTP response to the printer 200.

Upon reception of the response in step S1907, the printer 200 checks in step S1908 whether the content of the response is "200 OK". The flow further advances to step S1909 to issue a POST request to the data transfer destination URL ServerDataReceiveURL of the format conversion service providing server, and transmits the print target data 1803 received from the client 100 as the entity body of the HTTP request.

If no response is received in a predetermined period of time after the POST request is issued in step S1904, the flow returns from step S1907 to step S1902 to search the service table again. In step S1903, it is checked whether there is another server that can be used. If it is determined in step S1908 that the received response indicates an error, the flow also returns to step S1902 to perform the same processing.

Upon reception of the print target data in step S1910, the server 300 converts the format of the received print target data in step S1911. In step S1912, the server 300 issues a POST command and returns converted data as the entity body of the HTTP request to the data transfer destination (DataReceiveURL 1002 in Fig. 17; 123.222.111.222 in this case) of the printer 200 which is received in step S1905.

If it is determined that in step S1910 that no data is received in the predetermined period of time after the response is issued in step S1906, the server 300 terminates the processing.

If the printer 200 determines in step S1913 that the print target data having undergone format conversion processing is received from the server 300, the flow advances to step S1914. In step S1914, the converted data is transmitted to the printer controller 12 to print data on printing sheets by the number of copies designated in advance. When the print processing is completed, the printer 200 issues the status code "200 OK" as an HTTP response to the client, and notifies the client of the completion of the print processing. The processing is then terminated.

If the print processing cannot be properly executed, the printer 200 issues the status code "500 Internet Server Error" as an HTTP error response and notifies the client of the corresponding information. The processing is then terminated.

With the above sequence of operations, the print processing is completed.

According to this service providing system, by using services dispersed on the network, data in various data formats and image formats can be converted into data that can be printed. This makes it unnecessary to incorporate any format conversion functions in network-capable printers.

Unlike the conventional client/server type network service system, this system allows a user to dynamically search for and find necessary services, and hence eliminates the necessity to reconstruct network information even when a new service is added on the network.

In addition, this system takes the form of providing a client with a given network service while letting it logically incorporate other network services as its own services. Therefore, the number of times of data transfer between devices until a given job is completed is decreased and protocols for data transfer are simplified, thereby improving processing efficiency.

### (Other Embodiment)

In the above embodiments, the printer has been exemplified as a service providing apparatus which is requested by a client to execute a job. However, the present invention is not limited to this. This apparatus includes any types of service providing apparatuses which are designed to process information and can perform data communication and service provision, in addition to a scanner, a FAX, a copying machine, and an image processing apparatus having a combination of the functions thereof.

In the above embodiments, the server has been exemplified as another service providing apparatus which is used by the printer as a service providing apparatus to execute a job from the client. However, the present invention is not limited to this. This apparatus includes any types of service providing apparatuses which can execute the communication method and service provision described in the above embodiments.

In the above embodiments, the method of describing an HTTP entity uses the standard protocol SOAP based on XML. However, the present invention is not limited to this. An HTTP entity can also be described by a vender-unique schema that is independently defined by the bender.

In the above embodiments, Ethernet (registered trademark) is exemplified as a physical layer. However, the present invention is not limited to this. A physical layer can be realized by using a radio communication scheme represented by Bluetooth. In addition, HTTP/TCP/IP is used as a communication protocol for a search for a service and transmission/reception of data. However, the present invention is not limited to this. Other protocols can also be used as long as a search for a service can be done by multicasting and two-way data communication.

In the above embodiments, the data format conversion service has been exemplified as a service provided from the server to the printer. However, the present invention is not limited to this. The services which a service providing apparatus requests with respect to another service providing apparatus upon reception of requests to execute jobs from a client include various kinds of services, e.g., image data compression/decompression processing based on JPEG, PNG, GIF, and the like, OCR conversion, and English-Japanese translation.

As is obvious, the object of the present invention is realized even by supplying a storage medium (or a recording medium) storing software program codes for realizing the functions of the above-described embodiments to a system or apparatus, and causing the computer (or a CPU or an MPU) of the system or apparatus to read out and execute the program codes stored in the storage medium. In this case, the program codes read out from the storage medium realize the functions of the above-described embodiments by themselves, and the storage medium storing the program codes constitutes the present invention. In addition, the functions of the above-described embodiments are realized not only when the readout program codes are executed by the computer but also when the OS (Operating System) running on the computer performs part or all of actual processing on the basis of the instructions of the program codes.

The functions of the above-described embodiments are also realized when the program codes read out from the storage medium are written in the memory of a function expansion board inserted into the computer or a function expansion unit connected to the computer, and the CPU of the function expansion board or function expansion unit performs part or all of actual processing on the basis of the instructions of the program codes.

As many apparently widely different embodiments of the present invention can be made without departing from the scope thereof, it is to be understood that the invention is not limited to the specific embodiments thereof except as defined in the appended claims.

## Claims

1. A printer (200) operable to be connected to a client apparatus (100) and service providing apparatus (300) via a network, wherein the printer (200) is operable to perform printing operations in response to receipt of print data, the printer being **characterized by** comprising:
determination means (9) operable to determine whether a print service requested by a client apparatus (100) can be performed by the printer (200);
search means responsive to a determination by said determination means that a service cannot be provided by the printer (200) to search for a service providing apparatus (300) operable to convert print data for the requested print service into print data suitable for use by the printer (200); and
transmission means (8) responsive to receipt of a print service request from a client apparatus (100) to cause address information to be sent to the client apparatus (100) requesting the print service, wherein the transmission means is operable to cause address information identifying the printer (200) to be sent to a client apparatus (100) requesting a print service if the determination means (9) has determined that the requested print service can be performed by the printer (200) and operable to cause address information identifying a service providing apparatus (300) identified by said search means as operable to convert print data for a requested print service into print data suitable for use by the printer (200) if said determination means (9) has determined that a requested print service cannot be performed by the printer (200)

2. A printer according to claim 1, **characterized by** further comprising means operable to generate a database identifying the services provided by service providing apparatus (300) identified by said search means.

3. A printing method operable to be performed by a printer (200) connected via a network to a client apparatus (100) and service providing apparatus (300), the method comprising:
transmitting (s202) a print service request from the client apparatus (100) to the printer (200); and
**characterized by** further comprising:
responding, at the printer (200), to receipt of a print service request from the client apparatus (100) by determining (s205), at the printer (200), whether the print service requested by the client apparatus (100) can be performed by the printer (200);
transmitting (s206) address information identifying the printer (200) to the client apparatus (100) requesting a print service if it is determined, by the printer (200), that the requested print service can be performed by the printer (200);
if it is determined, by the printer (200), that a requested print service cannot be performed by the printer (200), searching (s301), by the printer (200), for a service providing apparatus (300) operable to convert print data for the requested print service into print data suitable for use by the printer (200) and transmitting (s308) address information identifying a said service providing apparatus (300) to the client apparatus (100) requesting the print service;
responding, at the client apparatus (100), to receipt of address information from the printer (200) by transmitting (s211) print data from the client apparatus (100) to the address identified by the received address information;
if print data is received by the service providing apparatus (300) converting (s310) the received print data into print data suitable for use by the printer (200) and transmitting (s311) the converted print data to said printer (200); and
responding to receipt of print data at the printer (200) by printing (s213) the received data.

4. The method according to claim 3, further comprising the step of generating (s1207, s1208) a database storing information of the services provided by the service providing apparatus (300) identified by the printer (200) as capable of converting print data into print data suitable for use by the printer (200).

5. A control program for a printer **characterized by** the control program being operable to cause a printer (200) to become configured as a printer in accordance with claim 1 or claim 2.

## Patentansprüche

1. Drucker (200), der betreibbar ist, mit einer Client-Vorrichtung (100) und einer Dienstbereitstellungsvorrichtung (300) über ein Netzwerk verbunden zu werden, wobei der Drucker (200) betreibbar ist, Druckvorgänge als Antwort auf einen Empfang von Druckdaten durchzuführen,
**gekennzeichnet durch**:
eine Bestimmungseinrichtung (9), die betreibbar ist, zu bestimmen, ob ein **durch** eine Client-Vorrichtung (100) angeforderter Druckdienst **durch** den Drucker (200) durchgeführt werden kann,
eine Sucheinrichtung, die auf eine Bestimmung **durch** die Bestimmungseinrichtung, dass ein Dienst **durch** den Drucker (200) nicht bereitgestellt werden kann, reagiert, um nach einer Dienstbereitstellungsvorrichtung (300) zu suchen, die betreibbar ist, Druckdaten für den angeforderten Druckdienst in für eine Verwendung **durch** den Drucker (200) geeignete Druckdaten umzuwandeln, und
eine Übertragungseinrichtung (8), die auf einen Empfang einer Druckdienstanforderung von einer Client-Vorrichtung (100) reagiert, um zu veranlassen, dass Adressinformationen zu der den Druckdienst anfordernden Client-Vorrichtung (100) gesendet werden, wobei die Übertragungseinrichtung betreibbar ist, zu veranlassen, dass den Drucker (200) identifizierende Adressinformationen zu einer einen Druckdienst anfordernden Client-Vorrichtung (100) gesendet werden, falls die Bestimmungseinrichtung (9) bestimmt hat, dass der angeforderte Druckdienst **durch** den Drucker (200) durchgeführt werden kann, und betreibbar ist, Adressinformationen zu veranlassen, die eine **durch** die Sucheinrichtung identifizierte Dienstbereitstellungsvorrichtung (300) als zu einem Umwandeln von Druckdaten für einen angeforderten Druckdienst in für eine Verwendung **durch** den Drucker (200) geeignete Druckdaten betreibbar identifiziert, falls die Bestimmungseinrichtung (9) bestimmt hat, dass ein angeforderter Druckdienst **durch** den Drucker (200) nicht durchgeführt werden kann.

2. Drucker gemäß Anspruch 1, **dadurch gekennzeichnet, dass** er weiterhin eine Einrichtung aufweist, die betreibbar ist, eine Datenbank zu erzeugen, die die Dienste identifiziert, die durch eine durch die Sucheinrichtung identifizierte Dienstbereitstellungsvorrichtung (300) bereitgestellt sind.

3. Druckverfahren, das betreibbar ist, durch einen Drucker (200) durchgeführt zu werden, der über ein Netzwerk mit einer Client-Vorrichtung (100) und einer Dienstbereitstellungsvorrichtung (200) verbundenen ist, mit:
Übertragen (s202) einer Druckdienstanforderung von der Client-Vorrichtung (100) zu dem Drucker (200), und
**gekennzeichnet durch**:
Reagieren seitens des Druckers (200) auf einen Empfang einer Druckdienstanforderung von der Client-Vorrichtung (100) **durch** Bestimmen (s205) seitens des Druckers (200), ob der **durch** die Client-Vorrichtung (100) angeforderte Druckdienst **durch** den Drucker (200) durchgeführt werden kann,
Übertragen (s206) von den Drucker (200) identifizierenden Adressinformationen zu der einen Druckdienst anfordernden Client-Vorrichtung (100), wenn **durch** den Drucker (200) bestimmt wird, dass der angeforderte Druckdienst **durch** den Drucker (200) durchgeführt werden kann,
falls **durch** den Drucker (200) bestimmt wird, dass ein angeforderter Druckdienst **durch** den Drucker (200) nicht durchgeführt werden kann, Suchen (s301) **durch** den Drucker (200) nach einer Dienstbereitstellungsvorrichtung (300), die betreibbar ist, Druckdaten für den angeforderten Druckdienst in für eine Verwendung **durch** den Drucker (200) geeignete Druckdaten umzuwandeln, und Übertragen (s308) von eine solche Dienstbereitstellungsvorrichtung (300) identifizierenden Adressinformationen zu der den Druckdienst anfordernden Client-Vorrichtung (100),
Reagieren seitens der Client-Vorrichtung (100) auf einen Empfang von Adressinformationen von dem Drucker (200) **durch** Übertragen (s211) von Druckdaten von der Client-Vorrichtung (100) zu der **durch** die empfangenen Adressinformationen identifizierten Adresse,
falls Druckdaten **durch** die Dienstbereitstellungsvorrichtung (300) empfangen werden, Umwandeln (s310) der empfangenen Druckdaten in für eine Verwendung **durch** den Drucker (200) geeignete Druckdaten und Übertragen (s311) der umgewandelten Druckdaten zu dem Drucker (200), und
Reagieren auf einen Empfang von Druckdaten seitens des Druckers (200) **durch** Drucken (s213) der empfangenen Daten.

4. Verfahren gemäß Anspruch 3, weiterhin mit dem Schritt des Erzeugens (s1207, s1208) einer Datenbank, die Informationen der Dienste speichert, die durch die Dienstbereitstellungsvorrichtung (300) bereitgestellt werden, die von dem Drucker (200) identifiziert wird, zu einem Umwandeln von Druckdaten in für eine Verwendung durch den Drucker (200) geeignete Druckdaten in der Lage zu sein.

5. Steuerprogramm für einen Drucker, **dadurch gekennzeichnet, dass** das Steuerprogramm betreibbar ist, einen Drucker (200) zu veranlassen, als ein Drucker gemäß Anspruch 1 oder 2 konfiguriert zu werden.

## Revendications

1. Imprimante (200) pouvant être mise en oeuvre de façon à être connectée à un appareil client (100) et un appareil fournisseur de services (300) par l'intermédiaire d'un réseau, laquelle imprimante (200) peut être mise en oeuvre pour effectuer des opérations d'impression en réponse à la réception de données d'impression, l'imprimante étant **caractérisée en ce qu'**elle comporte :
un moyen de détermination (9) pouvant être mis en oeuvre pour déterminer si un service d'impression demandé par un appareil client (100) peut être exécuté par l'imprimante (200) ;
un moyen de recherche qui, en réponse à une détermination, par ledit moyen de détermination, du fait qu'un service ne peut pas être fourni par l'imprimante (200), est destiné à rechercher un appareil fournisseur de services (300) pouvant être mis en oeuvre pour convertir des données d'impression pour le service d'impression demandé en données d'impression aptes à une utilisation par l'imprimante (200) ; et
un moyen de transmission (8) qui, en réponse à la réception d'une demande de service d'impression provenant d'un appareil client (100), provoque l'envoi d'une information d'adresse à l'appareil client (100) demandant le service d'impression, le moyen de transmission pouvant être mis en oeuvre pour provoquer l'envoi d'une information d'adresse, identifiant l'imprimante (200), à un appareil client (100) demandant un service d'impression si le moyen de détermination (9) a déterminé que le service d'impression demandé peut être exécuté par l'imprimante (200), et pouvant être mis en oeuvre pour occasionner une information d'adresse, identifiant un appareil fournisseur de services (300) identifié par ledit moyen de recherche comme pouvant être mis en oeuvre pour convertir des données d'impression pour un service d'impression demandé en données d'impression aptes à une utilisation par l'imprimante (200), si ledit moyen de détermination (9) a déterminé qu'un service d'impression demandé ne peut pas être exécuté par l'imprimante (200).

2. Imprimante selon la revendication 1, **caractérisée en ce qu'**elle comporte en outre un moyen pouvant être mis en oeuvre pour générer une base de données identifiant les services fournis par l'appareil fournisseur de services (300) identifié par ledit moyen de recherche.

3. Procédé d'impression pouvant être mis en oeuvre pour être exécuté par une imprimante (200) connectée par un réseau à un appareil client (100) et à un appareil fournisseur de services (300), le procédé comprenant :
la transmission (s202) d'une demande de service d'impression de l'appareil client (100) à l'imprimante (200) ; et
**caractérisé en ce qu'**il comprend en outre :
la réponse, au niveau de l'imprimante (200), à la réception d'une demande de service d'impression provenant de l'appareil client (100), en déterminant (s205), à l'imprimante (200), si le service d'impression demandé par l'appareil client (100) peut être exécuté par l'imprimante (200) ;
la transmission (s206) d'une information d'adresse identifiant l'imprimante (200) à l'appareil client (100) demandant un service d'impression s'il est déterminé, par l'imprimante (200), que le service d'impression demandé peut être exécuté par l'imprimante (200) ;
s'il est déterminé, par l'imprimante (200), qu'un service d'impression demandé ne peut pas être exécuté par l'imprimante (200), la recherche (s301), par l'imprimante (200), d'un appareil fournisseur de services (300) pouvant être mis en oeuvre pour convertir des données d'impression pour le service d'impression demandé en données d'impression aptes à une utilisation par l'imprimante (200), et la transmission (s308) d'une information d'adresse identifiant ledit appareil fournisseur de services (300) à l'appareil client (100) demandant le service d'impression ;
la réponse, au niveau de l'appareil client (100), à la réception d'une information d'adresse provenant de l'imprimante (200), par la transmission (s211) de données d'impression de l'appareil client (100) à l'adresse identifiée par l'information d'adresse reçue ;
si des données d'impression sont reçues par l'appareil fournisseur de services (300), la conversion (s310) des données d'impression reçues en données d'impression aptes à une utilisation par l'imprimante (200) et la transmission (s311) des données d'impression converties à ladite imprimante (200) ; et
la réponse, à la réception de données d'impression à l'imprimante (200), par l'impression (s213) des données reçues.

4. Procédé selon la revendication 3, comprenant en outre l'étape de génération (s1207, s1208) d'une base de données stockant des informations des services fournis par l'appareil fournisseur de services (300) identifié par l'imprimante (200) comme capable de convertir des données d'impression en données d'impression aptes à une utilisation par l'imprimante (200).

5. Programme de commande pour une imprimante, **caractérisé en ce que** le programme peut être mis en oeuvre pour amener une imprimante (200) à prendre une configuration en tant qu'imprimante selon la revendication 1 ou la revendication 2.
